(19) Europäisches Patentamt / European Patent Office / Office européen des brevets

(11) **EP 3 477 057 B1**

(12) **FASCICULE DE BREVET EUROPEEN**

(45) Date de publication et mention
de la délivrance du brevet:
**09.02.2022 Bulletin 2022/06**

(21) Numéro de dépôt: **18306419.5**

(22) Date de dépôt: **30.10.2018**

(51) Classification Internationale des Brevets (IPC):
*F01D 5/14* *(2006.01)*    *F01D 5/28* *(2006.01)*
*F01D 9/04* *(2006.01)*    *F01D 25/16* *(2006.01)*
*F04D 29/54* *(2006.01)*    *F04D 29/66* *(2006.01)*

(52) Classification Coopérative des Brevets (CPC):
**F01D 9/041; F01D 5/141; F04D 29/544;**
**F04D 29/667; F04D 29/681;** F01D 5/282;
F01D 25/162; F05D 2200/221; F05D 2200/24;
F05D 2200/26; F05D 2220/36; F05D 2240/121;
F05D 2250/182; F05D 2250/183; F05D 2250/184;
(Cont.)

(54) **MODULATION DES SERRATIONS EN EXTRÉMITÉ D'AUBE**

MODULATION DER SÄGEZÄHNE AM ENDE EINER LAUFRADSCHAUFEL

MODULATION OF SERRATIONS AT BLADE END

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **30.10.2017 FR 1760212**

(43) Date de publication de la demande:
**01.05.2019 Bulletin 2019/18**

(73) Titulaire: **SAFRAN AIRCRAFT ENGINES**
**75015 Paris (FR)**

(72) Inventeurs:
• **FIGEUREU, Claire Marie**
**77550 MOISSY-CRAMAYEL (FR)**
• **LEMARECHAL, Eric Pierre Georges**
**77550 MOISSY-CRAMAYEL (FR)**
• **BULOT, Benjamin**
**77550 MOISSY-CRAMAYEL (FR)**
• **GRUBER, Mathieu Simon Paul**
**77550 MOISSY-CRAMAYEL (FR)**
• **BARRIER, Raphaël**
**75013 PARIS (FR)**
• **POLACSEK, Cyril**
**92140 CLAMART (FR)**

(74) Mandataire: **Regimbeau**
**20, rue de Chazelles**
**75847 Paris Cedex 17 (FR)**

(56) Documents cités:
EP-A1- 1 607 573    EP-A1- 3 205 826
FR-A1- 3 023 329    US-A1- 2013 164 488

(52) Classification Coopérative des Brevets (CPC):
(Cont.)
Y02T 50/60

**Description**

DOMAINE TECHNIQUE GENERAL

L'invention concerne le domaine de la gestion aéro-acoustique d'aube fixe dans une turbomachine pour aéronef ou dans un banc d'essai de turbomachine pour aéronef.

Ce type d'aube fixe se retrouve par exemple sur des OGV (*outlet guide vane*), ou redresseurs, disposés en aval d'un corps tournant pour redresser le flux d'air. On parlera d'aube de stator pour désigner une aube fixe.

Un exemple sera donné pour une turbomachine double flux avec une soufflante et un redresseur disposé en veine secondaire.

L'interaction entre l'écoulement mis en rotation par la soufflante et le redresseur dans la veine secondaire est à l'origine d'une source de bruit prédominante sur le bruit total généré par le moteur, voire par l'avion selon les régimes de fonctionnements.

ETAT DE L'ART

Plusieurs approches sont envisagées pour maitriser et/ou réduire le bruit d'origine aérodynamique, soit par modification du champ aérodynamique incident (l'excitation aérodynamique), soit par modification de la géométrie des stators (la réponse aéro-acoustique).

Dans le deuxième cas, il a été proposé une modification de la géométrie du bord d'attaque des aubes du stator sous forme de bord d'attaques ondulés communément appelés « *wavy leading edge* », « *serrated leading edge* » ou « *leading edge serrations* ».

Le principe de réduction des émissions de bruit générées par la grille OGV réside sur le fait de déphaser spatialement les sources de bruit distribuées le long du bord d'attaque par le biais d'ondulation, identiques ou non. Pour que le principe s'applique, la taille (profondeur, largeur, épaisseur) des ondulations doit être adaptée au contenu du champ aérodynamique incident (épaisseur et déficit des sillages moyens, taille des tourbillons pour la turbulence) qui varie en fonction du régime moteur.

Comme présenté dans les références listées ci-dessous, la fonction des variations géométriques selon la corde est donnée par l'équation suivante :

$$c(r) = c_0 + h.\sin(2\pi r/\lambda)$$

Où $c_0$ est la corde de référence, $h$ l'amplitude et $\lambda$ la longueur d'onde des ondulations et $r$ le rayon.

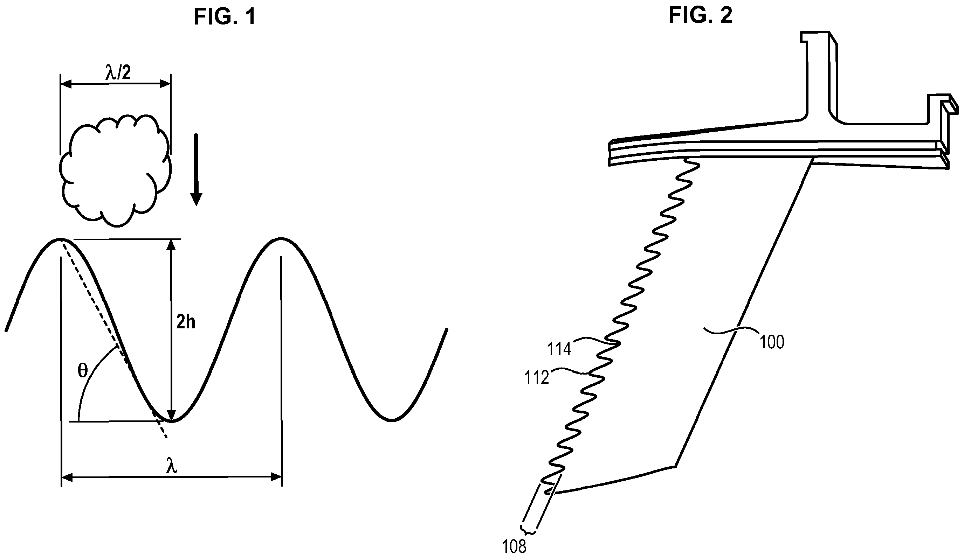

L'angle $\theta$ exprimé ci-dessous est un paramètre clé dans la réduction du bruit. Sa valeur est déterminée par la formule suivante, illustrée en **figure 1 :**

$$\theta = atan(4h/\lambda)$$

La valeur de $\lambda$ est choisie à partir de la longueur d'onde de la turbulence du fluide arrivant au bord d'attaque de l'aube.

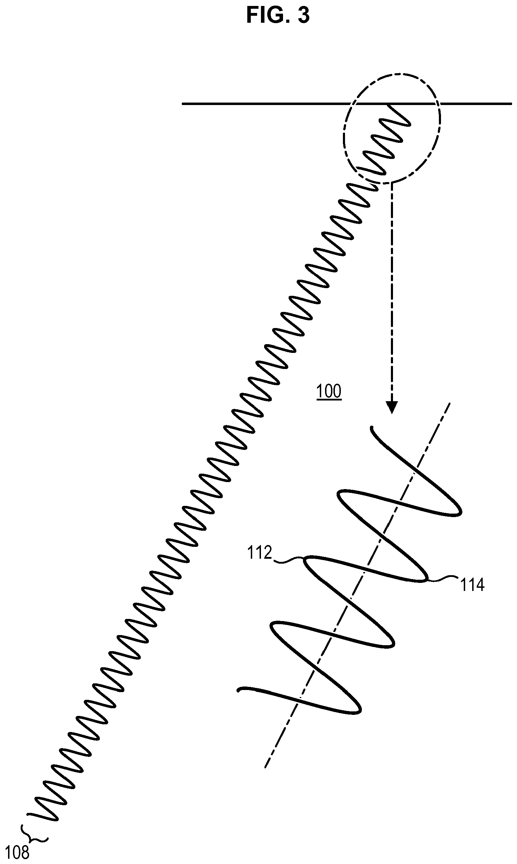

La **figure 2** illustre le résultat de l'application de ces formules sur des aubes 100, où l'on observe les dents 112 et les creux 114 du bord d'attaque 108 et les ondulations périodiques. La **figure 3** représente schématiquement ces dents et creux.

Toutefois, la présence des dents 112 au bord d'attaque 108 réduit fortement le bilan mécanique des OGV, avec de fortes concentrations de contraintes dans les creux de dent.

En effet sous effort aérodynamique la pale fléchit tangentiellement, ce qui induit un effet de cisaillement transverse d'une dent à l'autre. Ainsi les dents sont longues, plus le rayon des creux de dent est faible, et plus la contrainte dans les creux de dents sera élevée.

Or, ce constat est inverse au gain acoustique escompté puisque ce dernier est maximisé pour des dents fines et longues.

Il existe donc un besoin de solutions permettant de protéger les aubes ayant des profils en serration.

Il est aussi connu les demandes de brevets référence US-A-2013164488 et EP-A-3205826.

PRESENTATION DE L'INVENTION

Pour cela, l'invention propose une aube de stator comprenant :

- un pied d'aube,
- une tête d'aube,
- un bord d'attaque s'étendant entre le pied et la tête, le bord d'attaque ayant un profil en serration présentant une succession de dents et de creux ayant chacune une amplitude et une épaisseur,

caractérisée en ce qu'une série d'au moins trois dents et trois creux consécutifs à partir du pied d'aube et /ou de la tête d'aube présentent une amplitude et/ou une épaisseur croissante.

L'invention peut comprendre les caractéristiques suivantes, prises seules ou en combinaison :

- la série comprend au moins quatre dents et quatre creux,
- la série s'étend entre 20 et 50% de la longueur de l'aube,
- le profil en serration est de type sinusoïdal et dans laquelle, au niveau de la série, l'amplitude et/ou l'épaisseur des dents et des creux est combinée à une fonction linéaire, parabolique, sinusoidale ou exponentielle,
- le profil en serration s'exprime sous la forme suivante :

$$c(r) = c_0 + h.\sin(2\pi r/\lambda)$$

- au niveau de la série, l'amplitude et/ou l'épaisseur des dents et des creux est combinée à une fonction linéaire de sorte que le profil s'exprime au niveau de ladite série :

$$c(r) = c_0 + h.\sin(2\pi r/\lambda).K.r$$

où K est une constante, ou
une fonction parabolique de sorte que le profil s'exprime au niveau de ladite série :

$$c(r) = c_0 + h.\sin(2\pi r/\lambda).L.r^2$$

où L est une constante,
ou
une fonction sinusoïdale de sorte que le profil s'exprime au niveau de ladite série :

$$c(r) = c_0 + h.\sin(2\pi r/\lambda).\sin(M\,\pi/2\,.r)$$

où M est une constante,
ou
une fonction exponentielle de sorte que le profil s'exprime au niveau de ladite série :

$$c(r) = c_0 + h.\sin(2\pi r/\lambda).\exp(N.r)$$

où N est une constante.

- l'aube est en matériau composite,
- l'amplitude du premier creux ou de la première dent à partir de la tête ou du pied d'aube n'est pas nulle,

L'invention concerne aussi une couronne de redresseur comprenant une pluralité d'aubes telles que décrites précédemment, les aubes étant réparties circonférentiellement autour d'un moyeu.

L'invention concerne aussi une turbomachine ou un banc d'essai comprenant une aube ou une couronne telle que décrite précédemment.

Il s'agit d'une turbomachine ou un banc d'essai par exemple de type turbomachine partielle, cet ensemble étant par exemple un redresseur monoflux de la turbomachine partielle en constituant une veine qui correspondrait à une veine secondaire en considérant le cas d'une turbomachine complète.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 représente un schéma illustrant les grandeurs définissant un profil en serration,
- Les figures 2 et 3 illustrent une partie d'aube de stator avec un profil en serration et son agrandissement,
- La figure 4 illustre une partie d'aube de stator avec un profil en serration conforme à un mode de réalisation de l'invention,
- La figure 5 illustre une sinusoïde,
- Les figures 6 à 9 illustrent des sinusoïdes combinées à différentes fonctions dans le cadre de l'invention.

DESCRIPTION DETAILLEE

On se place dans le cadre d'une portion de turbomachine, typiquement une veine qui pourrait être équivalente à une veine secondaire d'une turbomachine double flux avec redresseur (OGV) disposé en sortie de soufflante. Il peut donc s'agir d'un cadre de banc d'essai, par exemple pour des redresseurs monoflux ou tout type de banc d'essai dans lequel une aube fixe est utilisée. Un tel banc d'essai est par exemple un moteur partiel permettant par exemple de valider des données sur des phénomènes représentatifs de ceux intervenant habituellement dans la veine secondaire d'un moteur complet.

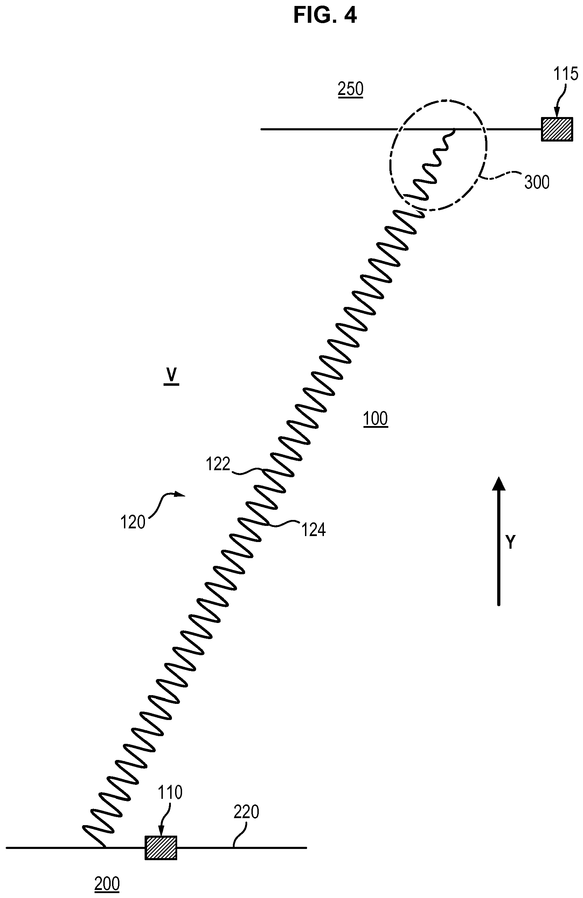

La **figure 4** illustre une partie d'aube 100 comprenant un pied d'aube 110 à une extrémité, qui est typiquement une extrémité radialement interne de l'aube 100. Le pied d'aube 110 s'attache à un moyeu 200, de révolution autour d'un axe longitudinal, qui correspond à un axe de rotation principale de la portion de turbomachine. Le moyeu 200 fait généralement partie du corps primaire d'une turbomachine double flux. L'aube 100 s'étend dans une direction radiale Y par rapport au moyeu 200 (chaque aube possède donc sa direction radiale Y propre).

A une autre extrémité, radialement externe, l'aube 100 est attachée à un carter 250 par une tête d'aube 115.

Pour former la veine V, une plateforme intérieure 220 peut être prévue radialement au-delà du moyeu 200, qui n'a pas de fonction aérodynamique.

L'aube 100 a une forme profilée pour redresser le flux, avec notamment un intrados et un extrados. Le pied 110 d'aube 100 peut avoir une forme dans le prolongement de l'intrados et de l'extrados.

L'aube 100 comprend un bord d'attaque 120 en serration, c'est-à-dire qu'il présente des ondulations, sous la forme d'une alternance de dents 122 et de creux 124, par exemple selon un motif sinusoïdal comme décrit en introduction.

L'aube 100 peut être en métal ou en matériau composite (matrice de résine avec renforts, typiquement en carbone).

Afin de protéger le profil serration, un objectif de l'invention est de soulager mécaniquement les dents et creux où les contraintes sont les plus importantes.

Pour cela, comme illustré en **figure 4,** on définit une série 300 d'au moins trois dents 122 et trois creux 124 successifs, à partir du pied d'aube 110 et/ou de la tête d'aube 115. En d'autres termes, cette série 300 comprend les serrations les plus proches du bord de la veine V. Sur cette série, l'amplitude des dents 122 et des creux 124 va en diminuant en s'approchant du pied d'aube 110 ou de la tête d'aube 115. Alternativement ou complémentairement, il s'agit de l'épaisseur du bord d'attaque 120 qui va en augmentant en s'approchant du pied d'aube 110 ou de la tête d'aube 115.

Cette série 300 peut se retrouver au niveau de la tête de d'aube 115 et/ou du pied d'aube 110.

L'amplitude est définie comme la distance entre le sommet (de la dent ou du creux) par rapport au profil droit. Il correspond donc au « $h \sin(2\pi r/\lambda)$ » de la formule donnée en introduction.

L'épaisseur est définie au niveau du profil droit (c'est-à-dire pour une amplitude de dent ou de creux nulle). En effet, l'épaisseur de l'aube 100 est variable entre l'amont et l'aval de l'aube : elle est par exemple plus faible au niveau des sommets des dents 122 qu'au niveau des sommets des creux 124.

Une telle aube 100 permet de répartir la charge en lissant la contrainte sur plusieurs serrations.

Dans la suite de la demande, on ne parlera que de « diminution de l'amplitude », qui peut être remplacée par « augmentation de l'épaisseur ».

Pour assurer cette continuité, la diminution de l'amplitude peut être régie par des formules.

On rappelle qu'on se place dans le cadre d'une aube 100 dont le profil en serration est défini de la forme suivante :

$$c(r) = c_0 + h.\sin(2\pi r/\lambda)$$

Où $c_0$ est la corde de référence, h l'amplitude et $\lambda$ la longueur d'onde des ondulations et r le rayon. Par le rayon, on entend le positionnement le long du bord d'attaque 120 (qui s'étend radialement à partir de l'axe longitudinal, d'où le terme de rayon). On suppose que r=0 signifie que l'on se trouve contre le bord de la veine V, soit au niveau de la tête d'aube 115 soit au niveau du pied d'aube 110.

On simplifie conceptuellement l'équation en considérant que λ est une constante fixée arbitrairement.

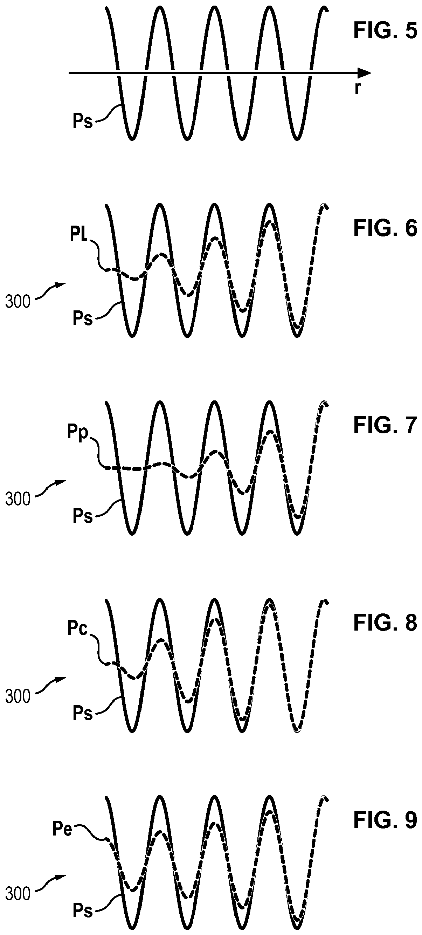

Ce profil sinusoïdal régulier Ps est illustré en **figure 5.**

Plusieurs modes de réalisations permettent de moduler les serrations dans la série 300.

Dans un mode de réalisation illustré en **figure 6,** la diminution se fait par une fonction linéaire. Le profil PI sur la série 300 s'exprime alors sous la forme suivante :

$$c(r) = c_0 + h.\sin(2\pi r/\lambda).K.r$$

où K est une constante choisie en fonction de la vitesse de diminution souhaitée.

Dans un mode de réalisation illustré en **figure 7**, la diminution se fait par une fonction parabolique. Le profil Pp s'exprime alors sous la forme suivante :

$$c(r) = c_0 + h.\sin(2\pi r/\lambda).L.r^2$$

où L est une constante choisie en fonction de la vitesse de diminution souhaitée.

Dans un mode de réalisation illustré en **figure 8,** la diminution se fait par une fonction sinusoïdale. Le profil Pc s'exprime alors sous la forme suivante :

$$c(r) = c_0 + h.\sin(2\pi r/\lambda).\sin(M\,\pi/2.r)$$

où M est une constante choisie en fonction de la vitesse de diminution souhaitée.

Dans un mode de réalisation illustré en **figure 9,** la diminution se fait par une fonction exponentielle. Le profil Pe s'exprime alors sous la forme suivante :

$$c(r) = c_0 + h.\sin(2\pi r/\lambda).\exp(N.r)$$

où N est une constante choisie en fonction de la vitesse de diminution souhaitée.

Toute fonction continue strictement décroissante en direction du pied 110 ou de la tête 115 d'aube convient en pratique.

Préférablement, on évite que la première dent 122 ou le premier creux 124 ait une amplitude nulle, car cela ne fait que reporter la charge sur la dent ou le creux suivant. Pour cela, il suffit d'intégrer un léger offset, de type r-r0 dans les équations données ci-dessus.

Dans un mode de réalisation, la série 300 comprend quatre, voire cinq creux et cinq dents successifs.

Dans un mode de réalisation, la série 300 s'étend entre 20 et 50% de la longueur de l'aube 100 dans la veine.

Il est possible de combiner les variations d'amplitude et d'épaisseur, afin de créer un profil d'aube 100 variable tridimensionnellement.

Outre une turbomachine, cette aube 100 peut être montée dans le cadre d'un banc d'essai ou d'une turbomachine de test.

## Revendications

**1.** Aube (100) de stator comprenant :

- un pied d'aube (110),
- une tête d'aube (115),
- un bord d'attaque (120) s'étendant entre le pied (110) et la tête (115), le bord d'attaque ayant un profil en serration présentant une succession de dents (122) et de creux (124) ayant chacune une amplitude et une épaisseur,

**caractérisée en ce qu'**une série (300) d'au moins trois dents (122) et trois creux (124) consécutifs à partir du pied d'aube (110) et /ou de la tête d'aube (115) présentent une amplitude et/ou une épaisseur croissante.

2.  Aube (100) selon la revendication 1, dans laquelle la série (300) comprend au moins quatre dents et quatre creux ou s'étend entre 20 et 50% de la longueur de l'aube (100).

3.  Aube (100) selon l'une quelconque des revendications 1 à 2, dans laquelle le profil en serration est de type sinusoïdal et dans laquelle, au niveau de la série (300), l'amplitude et/ou l'épaisseur des dents et des creux est combinée à une fonction linéaire, parabolique, sinusoidale ou exponentielle.

4.  Aube (100) selon l'une quelconque des revendications 1 à 3, dans lequel le profil en serration s'exprime sous la forme suivante :

$$c(r) = c_0 + h.\sin(2\pi r/\lambda)$$

Où $c_0$ est la corde de référence, $h$ l'amplitude et $\lambda$ la longueur d'onde des ondulations et $r$ le rayon et dans laquelle, au niveau de la série (300), l'amplitude et/ou l'épaisseur des dents et des creux est combinée à une fonction linéaire de sorte que le profil s'exprime au niveau de ladite série :

$$c(r) = c_0 + h.\sin(2\pi r/\lambda).K.r$$

où K est une constante,
ou
une fonction parabolique de sorte que le profil s'exprime au niveau de ladite série :

$$c(r) = c_0 + h.\sin(2\pi r/\lambda).L.r^2$$

où L est une constante,
ou
une fonction sinusoidale de sorte que le profil s'exprime au niveau de ladite série :

$$c(r) = c_0 + h.\sin(2\pi r/\lambda).\sin(M\,\pi/2\,.r)$$

où M est une constante,
ou
une fonction exponentielle de sorte que le profil s'exprime au niveau de ladite série :

$$c(r) = c_0 + h.\sin(2\pi r/\lambda).\exp(N.r)$$

où N est une constante.

5.  Aube selon l'une quelconque des revendications 1 à 4, dans lequel l'aube (100) est en matériau composite.

6.  Aube selon l'une quelconque des revendications 1 à 5, dans laquelle l'amplitude du premier creux (124) ou de la première dent (122) à partir de la tête (110) ou du pied d'aube (115) n'est pas nulle.

7.  Couronne de redresseur comprenant une pluralité d'aubes selon l'une quelconque des revendications 1 à 6, les aubes (100) étant réparties circonférentiellement autour d'un moyeu (200).

8.  Turbomachine ou banc d'essai comprenant une aube selon l'une quelconque des revendications 1 à 6 ou une couronne selon la revendication 7.

**Patentansprüche**

1. Statorschaufel (100), umfassend:

   - einen Schaufelfuß (110),
   - eine Schaufelspitze (115),
   - eine Vorderkante (120), die sich zwischen dem Fuß (110) und der Spitze (115) erstreckt, wobei die Vorderkante ein gezacktes Profil mit einer Folge von Zähnen (122) und Mulden (124) aufweist, die jeweils eine Amplitude und eine Dicke haben,

   **dadurch gekennzeichnet, dass** eine Reihe (300) von mindestens drei Zähnen (122) und drei Mulden (124), die ausgehend von dem Schaufelfuß (110) und/oder von der Schaufelspitze (115) ausgehend aufeinander folgen, eine zunehmende Amplitude und/oder Dicke aufweisen.

2. Schaufel (100) nach Anspruch 1, wobei die Reihe (300) mindestens vier Zähne und vier Mulden umfasst oder sich über 20 bis 50 % der Länge der Schaufel (100) erstreckt.

3. Schaufel (100) nach einem der Ansprüche 1 bis 2, bei der das gezackte Profil vom Sinustyp ist und bei der innerhalb der Reihe (300) die Amplitude und/oder die Dicke der Zähne und der Mulden mit einer linearen, parabolischen, sinusförmigen oder exponentiellen Funktion kombiniert ist.

4. Schaufel (100) nach einem der Ansprüche 1 bis 3, wobei das gezackte Profil in der folgenden Form ausgedrückt ist:

$$c(r) = c_0 + h.\sin\left(2\pi r/\lambda\right)$$

   wobei $c_0$ die Bezugssehne, h die Amplitude und $\lambda$ die Wellenlänge der Wellen und r der Radius ist
   und wobei innerhalb der Reihe (300) die Amplitude und/oder die Dicke der Zähne und der Mulden kombiniert wird mit
   einer linearen Funktion, so dass das Profil innerhalb der Reihe wie folgt ausgedrückt wird:

$$c(r) = c_0 + h.\sin(2\pi r/\lambda).K.r$$

   wobei K eine Konstante ist,
   oder
   einer parabolischen Funktion, so dass das Profil innerhalb dieser Reihe wie folgt ausgedrückt wird:

$$c(r) = c_0 + h.\sin(2\pi r/\lambda).L.r^2$$

   wobei L eine Konstante ist,
   oder
   einer sinusförmigen Funktion, so dass das Profil innerhalb dieser Reihe wie folgt ausgedrückt wird:

$$c(r) = c_0 + h.\sin(2\pi r/\lambda).\sin\left(M\,\pi/2\,.r\right)$$

   wobei M eine Konstante ist,
   oder
   einer exponentiellen Funktion, so dass das Profil innerhalb dieser Reihe wie folgt ausgedrückt wird:

$$c(r) = c_0 + h.\sin(2\pi r/\lambda).\exp(N.r)$$

   wobei N eine Konstante ist.

5. Schaufel nach einem der Ansprüche 1 bis 4, wobei die Schaufel (100) aus Verbundwerkstoff hergestellt ist.

6. Schaufel nach einem der Ansprüche 1 bis 5, wobei die Amplitude der ersten Mulde (124) oder des ersten Zahns (122) von der Spitze (110) oder vom Fuß (115) der Schaufel aus ungleich Null ist.

7. Richtring mit einer Vielzahl von Schaufeln nach einem der Ansprüche 1 bis 6, wobei die Schaufeln (100) in Umfangsrichtung um eine Nabe (200) verteilt sind.

8. Turbomaschine oder Prüfstand mit einer Schaufel nach einem der Ansprüche 1 bis 6 oder einem Ring nach Anspruch 7.

**Claims**

1. A stator vane (100) comprising:

   - a vane root (110),
   - a vane tip (115),
   - a leading edge (120) extending between the root (110) and the tip (115), the leading edge having a serrated profile having a succession of teeth (122) and of troughs (124) each having an amplitude and a thickness,

   **characterized in that** a series (300) of at least three teeth (122) and three troughs (124) that are consecutive starting from the vane root (110) and/or from the vane tip (115) have a growing amplitude and/or thickness.

2. The vane (100) according to claim 1, wherein the series (300) comprises at least four teeth and four troughs or extends between 20 and 50% of the length of the vane (100).

3. The vane (100) according to any one of claims 1 to 2, wherein the serrated profile is of the sinusoidal type and in which, within the series (300), the amplitude and/or the thickness of the teeth and of the troughs is combined with a linear, parabolic, sinusoidal or exponential function.

4. The vane (100) according to any one of claims 1 to 3, wherein the serrated profile is expressed in the following form:

$$c(r) = c_0 + h.\sin\left(2\pi r/\lambda\right)$$

Where $c_0$ is the reference chord, h the amplitude and $\lambda$ the wavelength of the undulations and r the radius and wherein, within the series (300), the amplitude and/or the thickness of the teeth and of the troughs is combined with a linear function so that the profile is expressed within said series:

$$c(r) = c_0 + h.\sin(2\pi r/\lambda).K.r$$

where K is a constant,
or
a parabolic function so that the profile is expressed within said series:

$$c(r) = c_0 + h.\sin(2\pi r/\lambda).L.r^2$$

where L is a constant,
or
a sinusoidal function so that the profile is expressed within said series:

$$c(r) = c_0 + h.\sin(2\pi r/\lambda).\sin\left(M\,\pi/2\,.r\right)$$

where M is a constant,
or
an exponential function so that the profile is expressed within said series:

$$c(r) = c_0 + h.\sin(2\pi r/\lambda).\exp(N.r)$$

where N is a constant.

5. The vane according to any one of claims 1 to 4, wherein the vane (100) is made of composite material.

6. The vane according to any one of claims 1 to 5, wherein the amplitude of the first trough (124) or of the first tooth (122) from the tip (110) or from the root (115) of the vane is nonzero.

7. A straightener ring comprising a plurality of vanes according to any one of claims 1 to 6, the vanes (100) being distributed circumferentially around a hub (200) .

8. A turbomachine or test bed comprising a vane according to any one of claims 1 to 6 or a ring according to claim 7.

# FIG. 1

# FIG. 2

EP 3 477 057 B1

# FIG. 3

100

112

114

108

# FIG. 4

**FIG. 5**

**FIG. 6**

**FIG. 7**

**FIG. 8**

**FIG. 9**

**EP 3 477 057 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013164488 A

- EP 3205826 A